# EUROPÄISCHE PATENTSCHRIFT

(11) **EP 0 387 556 B1**
(45) Veröffentlichungstag und Bekanntmachung des Hinweises auf die Patenterteilung: **22.06.1994**
(21) Anmeldenummer: 90103387.8
(22) Anmeldetag: 22.02.1990
(51) Int. Cl.: H01L 31/00, H05K 9/00

(54) **Infrarotdetektor**
Infra-red detector
Détecteur infra-rouge

(30) Priorität: 16.03.1989 DE 3908627
(43) Veröffentlichungstag der Anmeldung: 19.09.1990
(73) Patentinhaber: Bodenseewerk Gerätetechnik GmbH, 88662 Überlingen (DE)
(72) Erfinder: Bross, Walter, D-7770 Überlingen (DE); Rid, Robert, D-7778 Markdorf (DE); Kordulla, Hans, D-7776 Owingen (DE)
(74) Vertreter: Weisse, Jürgen, Dipl.-Phys. Patentanwalt

(56) Entgegenhaltungen:
- EP-A- 0 125 016
- EP-A- 0 198 549
- DD-A- 134 182
- DE-B- 2 109 561
- SOVIET INVENTIONS ILLUSTRATED Woche 8408, 4. April 1984,Zusammenfassung Nr. 047737 S/01, Derwent Publications Ltd., London, GB & SU-A-1012467 (PIVOVAROV VV) 15.04.1983
- PROCEEDINGS OF THE NATIONAL ELECTRONICS CONFERENCE, Band 37, 1983, Seiten 132-136, Oak Brook, IL, US; K.E. FELSKE: "Designing metallic enclosures for EMI shielding"

## Beschreibung

### Technisches Gebiet

Die Erfindung betrifft einen Infrarotdetektor mit einer Mehrzahl von infrarotempfindlichen Detektorelementen, bei welchem vor den Detektorenelementen eine Mehrzahl von Lichtleitern angeordnet ist.

### Zugrundeliegender Stand der Technik

Es ist bekannt, daß Infrarotdetektoren durch elektromagnetische Strahlung, insbesondere durch Radar, gestört werden können. ("Rev. Sci. Instrum 53 (6) June 1982,735-748). Es müssen besondere Maßnahmen getroffen werden, um solche Störungen zu vermeiden.

Es ist versucht worden, die "elektromagnetische Verträglichkeit" von Infrarot-Suchköpfen mit Infrarotdetektoren gegenüber Radarstrahlen dadurch zu verbessern, daß optische Elemente im Strahlengang des Suichkopfes, z. B. ein Dom oder Linsen, mit elektrisch leitenden Beschichtungen versehen werden. Es sind auch elektrisch leitende Gitterstrukturen auf die optischen Elemente des Strahlenganges aufgebracht worden (DE-A-36 32 252). Beide Maßnahmen haben den Nachteil, daß mit der Dämpfung der Radarstrahlen auch die in den Infrarot-Suchköpfen ausgenutzte Strahlung gedämpft wird.

Durch die EP-A-0 198 549 ist eine Anordnung zur Begrenzung und Vergleichmäßigung des Gesichtsfeldes der Detektorelemente eines Mosaikdetektors bekannt, welche einen Nutzlichtstrom von einem beobachteten Gesichtsfeld erhalten. Jedes der Detektorelemente ist auf einem gekühlten Träger in einem Gefäß angeordnet, das evakuiert oder mit einem Gas geringer Wärmeleitfähigkeit gefüllt ist. Eine Anordnung vom optischen Fasern, die an dem gekühlten Träger angebracht und für den benutzten Spektralbereich durchlässig sind, ist in dem Gefäß in Kontakt mit den Detektorelementen oder in geringem Abstand von diesen gegenüber einem in diesem Spektralbereich durchlässigem Fenster angeordnet. Diese optischen Fasern dienen zwar als Lichtleiter für die infrarote Strahlung, bewirken aber keine Dämpfung von Radarstrahlen.

Die US-A-4 609 820, die inhaltlich der EO-A-0 125 016 entspricht, betrifft eine Bilderfassungsvorrichtung mit einem Reihendetektor für Infrarot. Es soll dabei der Einfluß der Wärmestrahlung von den umgebenden Teilen durch eine Blende unterdrückt werden, so daß praktisch nur Strahlung aus dem beobachteten Gesichtsfeld auf den Reihendetektor trifft. Dabei soll sich die Störstrahlung, soweit sie nicht zu vermeiden ist, über die gesamte Fläche des Detektors gleichmäßig auswirken. Unter Bezugnahme auf Fig. 1 der US-A-4 609 820 ist dort erläutert, daß die Strahlung in der Mitte eines Reihendetektors stärker ist als an den Enden. Nach der Lehre der US-A-4 609 820 ist zur Vergleichsmäßigung der Strahlung über die Länge des Reihendetektors hinweg die Blende als gitterartiger Abschirmkörper ausgebildet. Eine lichtleitende Funktion hat diese Gitterstruktur nicht.

Die DE-B-2 541 818 und die DE-B-2 109 561 zeigen Infrarot-Strahlungsdetektor für Zielsuchköpfe , der ein einziges Detektorelement aufweist. Dieses Detektorelement ist in einem Dewar-Gefäß angeordnet. Durch ein Abbildungssystem mit einem dem Gesichtsfeld zugewandten Hohlspiegel und einem zur optischen Achse geneigten Planspiegel, der die am Hohlspiegel reflektierten Strahlen empfängt, wird ein kreisendes Gesichtsfeldbild in einer Bildebene erzeugt. In der Bildebene sitzt eine Modulatorscheibe. Durch eine Feldlinse und einen konischen Strahlenleiter wird die durch die Modulatorscheibe tretende Strahlung auf das Detektorelement geleitet.

Die GB-A-2 198 878 zeigt einen pyroelektrischen Strahlendetektor, bei welchem die strahlungsbeaufschlagte Oberfläche eines Elementes aus strahlungsempfindlichen Material mit einer Strahlung absorbierenden Elektrode versehen ist. Die Strahlung absorbierende Elektrode weist Ausschnitte auf, die mit Nuten in dem strahlungsempfindlichen Material fluchten. Die Nuten haben strahlungsabsorbierende Seitenwände, deren Tiefe in der Größenordnung der Wellenlänge der zu erfassenden Strahlung liegt. Die Breite der Nuten ist ähnlich bemessen.

Die US-A-4 591 717 zeigt einen Infrarotdetektor mit einer Vakuumröhre, in welcher eine photoempfindliche Schicht vorgesehen ist. Die photoempfindliche Schicht weist dicht gepackte, senkrecht auf einem Substrat angeordnete Nadeln in Form von Metallwhiskern auf.

Die DD-A-134 182 beschäftigt sich mit der Aufgabe, das Eindringen magnetischer Störfelder, insbesondere von 50-Hz-Brummfeldern, in eine abgeschirmte Hochvakuumkammer in die zum Evakuieren der Kammer dienende Hochvakuum-Saugleitung zu verhindern. Die Saugleitung weist einen verhältnismässig grossen Durchmesser auf und die Abschrimung erfolgt dadurch, dass die Saugleitung am Ort der Kammerwand durch eine Lochplatte geschlossen ist. Diese Lochplatte besteht aus einem magnetisch weichen Material, dessen Permeabilität und dessen Produkt aus Permeabilität und elektrischer Leitfähigkeit grösser als die entsprechenden Werte der Kammerwandung sind. In der Lochplatte befindet sich eine Vielzahl von Löchern, deren lichte Weite etwa 30 bis 50% der Plattenstärke beträgt.

Aus "Soviet Inventions Illustrated" Woche 06 aus 1984, vom 4. April 1984 betreffend die SU-A-1 012 467 ist eine eine Abschrimung gegen Dezimeter- und Zentimer-Wellen bekannt, bei der in den Wänden eines Gehäuses Schlitze angeordnet sind, deren Breite wesentlich kleiner als die geringste Wellenlänge bemessen ist.
In "Proceedung of the National Electronics Conference" Bd. 37. 1983, Seiten 132 bis 136, ist eine Abschirmung eines elektronischen Gerätes beschrieben, durch die das Austreten von Störstrahlungen aus dem Gerät verhindet werden soll. Hier wird vorgeschlagen, dass die grössten Abmessungen von Öffnungen in dieser Abschirmung kleiner als 1/60 der Wellenlänge sein sollen.

### Offenbarung der Erfindung

Der Erfindung liegt demgegenüber die Aufgabe zugrunde, einen Infrarotdetektor zu schaffen, bei welchem eine Dämpfung von Radarstrahlen erreicht wird, ohne daß eine entsprechende Dämpfung der ausgenutzten infraroten Strahlung erfolgt.

Erfindungsgemäß wird diese Aufgabe bei einem Infrarotdetektor der eingangs genannten Art dadurch gelöst, daß die Lichtleiter von Kanälen mit verspiegelten und elektrischleitfähigen Innenwänden gebildet sind, deren Abmessungen eine Dämpfung von Radarstrahlung bewirken.

Radarstrahlung wird bei Eintritt in Öffnungen mit elektrisch leitender Oberfläche, deren größte Ausdehnung unter der Wellenlänge der Radarstrahlung liegt, stark gedämpft. Die Dämpfung steigt mit zunehmendem Verhältnis von Wellenlänge zu Ausdehnung der Öffnung. Die Dämpfung steigt auch mit zunehmender Tiefe der Öffnung. Die Abmessungen eines Detektorelementes eines Infrarotdetektors liegt üblicherweise zwischen 30 »m und 200 »m. In der gleichen Größenordnung müssen die Querschnitte der Lichtleiter liegen. Diese Abmessungen liegen um ein Vielfaches unter der Wellenlänge von üblichen Radargeräten. Es kann daher durch solche Lichtleiter mit ausreichender Tiefe eine sehr hohe Dämpfung der Radarstrahlung von mehr als 80 dB bewirkt werden. Die infrarotstrahlung wird demgegenüber durch die Lichtleiter auf die Detektorelemente geleitet und dabei nur sehr wenig gedämpft.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

### Kurze Beschreibung der Zeichnungen

- Fig.1: ist eine perspektivische Darstellung und zeigt, teilweise geschnitten, den vorderen Teil eines Multielement-Infrarotdetektors.
- Fig.2: ist eine Ausschnittsvergrößerung des Bereiches "Z" in Fig.1 und zeigt Einzelheiten des Multielement- Infrarotdetektors mit Lichtleitern und einer Blendenplatte.
- Fig.3: zeigt einen Schnitt entlang einer Längsseite eines lichtleitenden Kanals und eine Blendenöffnung der Blendenplatte.
- Fig.4: zeigt einen Schnitt entlang einer Breitseite des lichtleitenden Kanals und der Blendenöffnung.

### Bevorzugte Ausführung der Erfindung

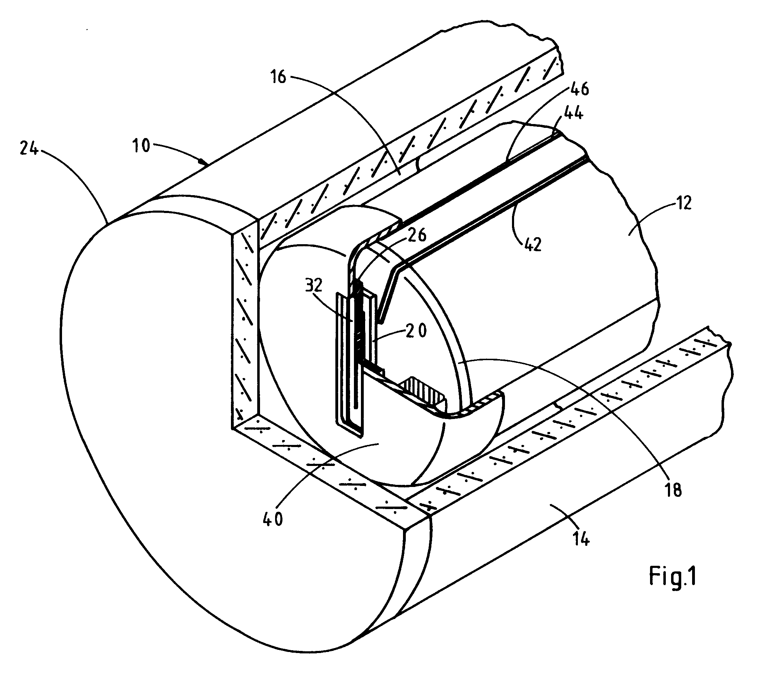

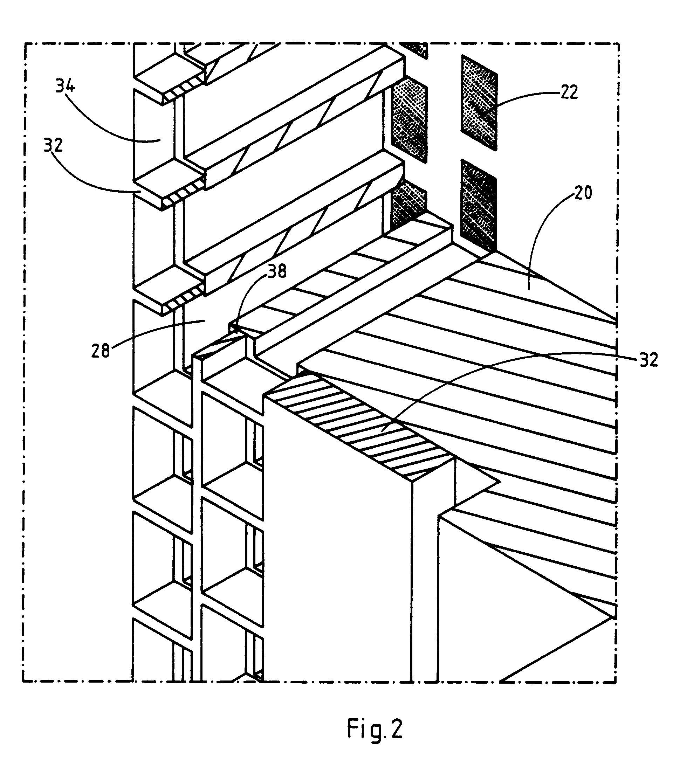

Mit 10 ist ein Dewar-Gefäß bezeichnet. Das Dewar-Gefäß 10 weist einen topfförmigen Innenteil 12 und einen diesen umgebenden, ebenfalls topfförmigen Außenteil 14 auf. Innenteil 12 und Außenteil 14 sind in üblicher, in Fig.1 nicht dargestellter Weise an ihren Rändern miteinander verbunden. Es entsteht so ein mantelförmiger Zwischenraum 16, der zur Wärmeisolation evakuiert wird. Innerhalb des Innenteils 12 sitzt ein (nicht dargestellter) Kühler, durch den insbesondere die Stirnwand 18 des Innenteils 12 gekühlt wird. Diese Stirnwand 18 bildet ein Substrat für einen integrierten Bauteil oder Chip 20 mit einem Raster von Detektorelementen 22 (Fig.2). Der Chip 20 sitzt auf der dem Außenteil 14 zugewandten Außenseite der Stirnwand 18 und wird über diese von dem Kühler gekühlt. Die Stirnwand 24 des Außenteils 14 ist von einem infrarotdurchlässigen Fenster gebildet. Bei Verwendung in einem Suchkopf wird voneiner (nicht dargestellten) Optik durch dieses Fenster hindurch ein Gesichtsfeldbild eines vom Suchkopf zu erfassenden Gesichtsfeldes im Bereich des Chips 20 mit den Detektorelementen 22 erzeugt.

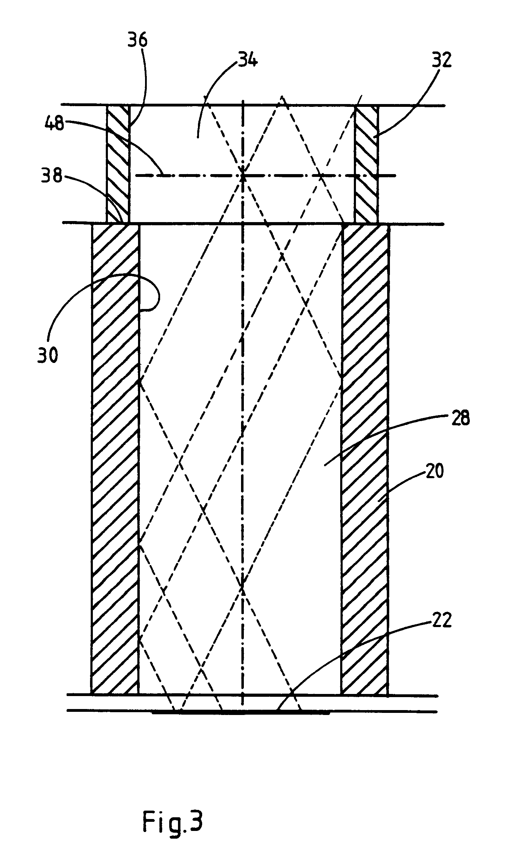

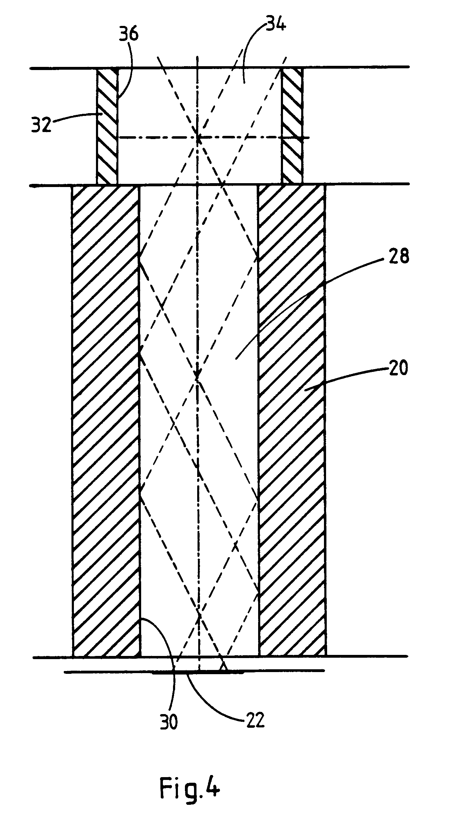

Vor dem Chip 20 mit den Detektorelementen 22 sitzt eine Kanalplatte 26 mit einer Vielzahl von lichtlieitenden Kanälen 28. Jedem Detektorelement 22 des Chips 20 ist ein solcher gerader, lichtleitender Kanal 28 zugeordnet. Die lichtleitenden Kanäle 28 sind zu den Detektorelementen 22 ausgerichtet und in ihrem Querschnitt etwa an die Form der Detektorelemente angepaßt. Die Kanäle 28 sind offen und an ihren Wänden mit reflektierenden und elektrisch leitfähigen Schichten 30 (Fig.3 und 4) versehen. Bei der dargestellten Ausführung haben die lichtleitenden Kanäle 28 rechteckigen Querschnitt, wie aus den Figuren 2 bis 4 erkennbar ist. Die Schichten 30 auf den Wänden der Kanäle 28 sind mit Signalmasse verbunden.

Vor der Kanalplatte 26 sitzt eine Blendenplatte 32. Die Blendenplatte 32 hat eine Vielzahl von Blendenöffnungen 34 in Form von rechteckigen Durchbrüchen. Für jedes Detektorelemente 22 ist eine solche Blendenöffnung 34 vorgesehen. Die Blendenöffnungen 34 fluchten mit den lichtleitenden Kanäle 28. Die Blendenöffnungen 34 sind aber etwas größer als die Querschnitte der lichtleitenden Kanäle 28. Die Innenwände 36 (Fig. 3 und 4) der Blendenöffnungen 34 sind geschwärzt und daher nicht-reflektierend.

Die Kanalplatte 26 und die Blendenplatte 32 sind elektrisch und wärmeleitend auf der Fläche 38 miteinander verbunden. Außerdem sind die Kanalplatte 26 und die Blendenplatte 32 elektrisch und wärmeleitend mit einem Verbindungskörper in Form einer topfförmigen Kappe 40 verbunden. Die Kappe 40 sitzt auf dem geschlossenen Ende des Innenteils 12. Auf dem Innenteil 12 verlaufen die Signalbahnen 42 der Detektorelemente. Diese Signalbahnen 42 sind dann von einer Isolierschicht 44 abgedeckt. Auf der Isolierschicht 44 ist eine elektrisch leitende Schicht 46 aufgebracht. Die Kappe 40 ist elektrisch leitend mit der Schicht 46 verbunden.

Ein Gesichtsfeldbild wird in einer Ebene 48 erzeugt, die innerhalb der Blendenplatte 32 und der Blendenöffnungen 34 liegt.

Durch die im Vergleich zur Wellenlänge der Radarstrahlung engen lichtleitenden Kanäle 28 erfolgt eine starke Dämpfung von einfallender Radarstrahlung, so daß praktisch keine Radarstrahlung an den Detektorelementen 22 wirksam wird. Die Infrarotstrahlung von den in der Ebene 48 erzeugten Bildelementen des Gesichtsfeldbildes wird dagegen, wie in Fig.3 und 4 angedeutet, auf das Detektorelement 22 geleitet. Die geschwärzten Blenden in der Blendenplatte 32 wirken als Kaltblenden und reduzieren die seitlich einfallende Störstrahlung, so daß im wesentlichen Nutzstrahlung auf die Detektorelemente 22 fällt.

## Patentansprüche

1. Infrarotdetektor mit einer Mehrzahl von infrarotempfindlichen Detektorelementen, bei welchem vor den Detektorelementen eine Mehrzahl von zu den Detektorelementen führenden Lichtleitern angeordnet ist, **dadurch gekennzeichnet, daß** die Lichtleiter von Kanälen (28) mit verspiegelten und elektrisch leitfähigen Innenwänden (30) gebildet sind, deren Abmessungen eine Dämpfung von Radarstrahlung bewirken.

2. Infrarotdetektor nach Anspruch 1, **dadurch gekennzeichnet, daß** die größten Abmessungen der Öffnung der Kanäle (28) kleiner sind als die Wellenlänge der Radarstrahlung.

3. Infrarotdetektor nach Anspruch 2, **dadurch gekennzeichnet, daß** der Infrarotdetektor ein Multielement-Infrarotdetektor ist.

4. Infrarotdetektor nach Anspruch 2, **dadurch gekennzeichnet, daß** der Infrarotdetektor ein Mosaikdetektor ist.

5. Infrarotdetektor nach Anspruch 1, **dadurch gekennzeichnet, daß** die lichtleitenden Kanäle (28) rechteckigen Querschnitt haben.

6. Infrarotdetektor nach Anspruch 1, **dadurch gekennzeichnet, daß** die lichtleitenden Kanäle (28) in einer Kanalplatte (26) gebildet sind, deren Oberflächen elektrisch leitend und mit Signalmasse verbunden sind.

7. Infrarotdetektor nach Anspruch 6, **dadurch gekennzeichnet, daß** vor der Kanalplatte (26) eine Blendenplatte (32) angeordnet ist, welche mit den lichtleitenden Kanälen (28) fluchtende Blendöffnungen (34) mit nichtreflektierenden Innenflächen aufweist.

8. Infrarotdetektor nach Anspruch 7, **dadurch gekennzeichnet, daß** die Blendenöffnungen (34) größer sind als der Querschnitt der lichtleitenden Kanäle (28).

9. Infrarotdetektor nach Anspruch 7 oder 8, **dadurch gekennzeichnet, daß** die Blendenplatte (32) elektrisch leitend mit der Kanalplatte (26) verbunden ist.

10. Infrarotdetektor nach Anspruch 1 oder 2, **dadurch gekennzeichnet, daß** die Detektorelemente (22) auf einem integrierten Bauteil (Chip) (20) angeordnet sind.

11. Infrarotdetektor nach den Ansprüchen 6 und 7, **dadurch gekennzeichnet, daß**
(a) ein Dewar-Gefäß (10) mit einem topfförmigen Innenteil (12) und einem, dieses mit Abstand umgebenden Außenteil (14) vorgesehen ist, wobei Innen- und Außenteil an ihren Rändern miteinander verbunden sind, und ein Kühler innerhalb des Innenteiles (12) angeordnet ist,
(b) ein die Detektorelemente (22) enthaltender Bauteil (20) auf der dem Außenteil (14) zugewandten Stirnwand des Innenteils (12) angeordnet und die Stirnwand (24) des Außenteils (14) von einem infrarotdurchlässigen Fenster gebildet ist, und
(c) die Kanalplatte (26) und die Blendenplatte (32) zu den Detektorelementen (22) ausgerichtet und elektrisch und wärmeleitend auf das geschlossene Ende des Innenteils (12) aufgesetzt sind.

12. Infrarotdetektor nach Anspruch 11, **dadurch gekennzeichnet, daß**
(a) Signalbahnen (42) der Detektorelemente (22) auf der Außenseite des Innenteils (12) angeordnet sind,
(b) über den Signalbahnen (42) eine Isolierschicht (44) aufgebracht ist,
(c) über der Isolierschicht (44) eine elektrisch leitende Schicht (46) vorgesehen ist und
(d) ein die Kanalplatte (26) und die Blendenplatte (32) verbindendes Verbindungselement (40) elektrisch leitend mit dieser elektrisch leitenden Schicht (46) verbunden ist.

13. Infrarotdetektor nach Anspruch 7, **dadurch gekennzeichnet, daß** die Bildebene eines von einer Abbildungsoptik erzeugten Gesichtsfeldbildes innerhalb der Blendenöffnungen (34) der Blendenplatte (32) liegt.

## Claims

1. Infrared detector containing a plurality infrared sensitive detector elements and a plurality of light guides arranged in front of the detector elements and leading to the detector elements, **characterised in that** the light guides are formed by passages (28) having reflecting and electrically conductive inner walls (30) which are dimensioned for attenuating radar radiation.

2. Infrared detector according to claim 1, **characterised in that** the greatest dimensions of the aperture of the passages (28) are smaller than the wavelength of the radar radiation.

3. Infrared detector according to claim 2, **characterised in that** the infrared detector constitutes a multielement infrared detector.

4. Infrared detector according to claim 2, **characterised in that** the infrared detector constitutes a mosaic infrared detector.

5. Infrared detector according to claim 1, **characterised in that** the light guiding passages (28) have rectangular cross-section.

6. Infrared detector according to claim 1, **characterised in that** the light guiding passages (28) are formed in a passage plate (26) having electrically conductive surfaces connected to signal ground.

7. Infrared detector according to claim 6, **characterised in that** a light stop plate (32) is arranged in front of the passage plate (28) and comprises light stop apertures (34) which are aligned with the light guiding passages (28) and which have non-reflecting inner faces.

8. Infrared detector according to claim 7, **characterised in that** the light stop apertures (34) are greater than the cross-section of the light guiding passages (28).

9. Infrared detector according to claim 7 or 8, **characterised in that** the light stop plate (32) is electrically conductively connected to the passage plate (26).

10. Infrared detector according to claim 1 or 2, **characterised in that** the detector elements (22) are arranged on an integrated component (chip) (20).

11. Infrared detector according to claims 6 and 7, **characterised in that**
(a) a Dewar vessel (10) is provided and has a pot-shaped inner portion (12) and an outer portion (14) surrounding the same at a spacing, said inner portion and said outer portion being interconnected at their rims and a cooler being disposed within the inner portion (12),
(b) a component (20) containing the detector elements (22) is arranged on an end wall of the inner portion (12) which end wall faces the outer portion (14), and the end wall (24) of the outer portion (14) is formed by a window which is transparent for infrared radiation, and
(c) the passage plate (22) and the light stop plate (32) are aligned to the detector elements (22) and electrically as well as thermally conductively applied to the closed end of the inner portion (12).

12. Infrared detector according to claim 11, **characterised in that**
(a) signal paths (42) of the detector elements (22) are disposed on the outer side of the inner portion (12),
(b) an insulating layer (44) is applied to the signal paths (42),
(c) an electrically conductive layer (46) is provided on the insulating layer (44), and
(d) a connecting element (40) interconnecting the passage plate (26) and the light stop plate (32) is electrically conductively connected with this electrically conductive layer (46).

13. Infrared detector according to claim 7, **characterised in that** the image plane of a field of view image generated by an imaging optical system, is located within the light stop apertures (34) of the light stop plate (32).

## Revendications

1. Détecteur infrarouge muni de plusieurs éléments sensibles à l'infrarouge, dans lequel plusieurs guides de lumière menant aux éléments de détecteur, sont disposés devant les éléments de détecteur, **caractérisé par le fait que** les guides de lumière sont formés par des canaux (28) munis de parois intérieures (30) métallisées et éléctriquement conductives et dont les dimensions provoquent un amortissement de la radiation radar.

2. Détecteur infrarouge selon la revendication 1, **caractérisé par le fait que** les dimensions les plus grandes de l'ouverture des canaux (28) sont inférieures à la longueur d'onde de la radiation radar.

3. Détecteur infrarouge selon la revendication 2, **caractérisé par le fait que** le détecteur infrarouge est un détecteur infrarouge à éléments multiples.

4. Détecteur infrarouge selon la revendication 2, **caractérisé par le fait que** le détecteur infrarouge est un détecteur de mosaique.

5. Détecteur infrarouge selon la revendication 1, **caractérisé par le fait que** les canaux conducteurs de lumière (28) ont une coupe transversale rectangulaire.

6. Détecteur infrarouge selon la revendication 1, **caractérisé par le fait que** les canaux conducteurs de lumière (28) sont formés dans une plaque de canal (26) dont les surfaces sont électriquement conductives et reliées à une masse de signal.

7. Détecteur infrarouge selon la revendication 6, **caractérisé par le fait que** une plaque d'obturateur (32) est disposée devant la plaque de canal (26), et présente des ouvertures d'obturateur (34) ayant des surfaces intérieures non-réfléchissantes et alignées aux canaux (28) conducteurs de lumière.

8. Détecteur infrarouge selon la revendication 7, **caractérisé par le fait que** les ouvertures d'obturateur (34) sont plus grandes que la coupe transversale des canaux (28) conducteurs de lumière.

9. Détecteur infrarouge selon la revendication 7 ou 8, **caractrésisé par le fait que** la plaque d'obturateur (32) est reliée à la plaque de canal (26) de sorte à être électriquement conductive.

10. Détecteur infrarouge selon la revendication 1 ou 2, **caractérisé par le fait que** les éléments de détecteur (22) sont disposés sur un composant intégré (chip) (20).

11. Détecteur infrarouge selon les revendications 6 et 7, **caractérisé par le fait qu**'on a prévu un récipient Dewar (10) ayant un élément intérieur (12) en forme de pot et un élément extérieur (14) entourant celui-ci à distance, l'élément intérieur et extérieur étant reliés à leurs bords, et un réfroidisseur étant disposé à l'intérieur de l'élément intérieur (12),
(b) un composant (20) comprenant les éléments de détecteur (22), est disposé sur le front de l'élément intérieur (12) en face de l'élément extérieur (14), et le front (24) de l'élément extérieur (14) est formé par une fenêtre transparente à l'infrarouge, et
(c) la plaque de canal (26) et la plaque d'obturateur (32) sont alignées vers les éléments de détecteur (22) et posées sur l'extrémité fermée de l'élément intérieur (12) de sorte à être électriquement et thermiquement conductives.

12. Détecteur infrarouge selon la revendication 11, **caractérisé par le fait que**
(a) des voies de signal (42) des éléments de détecteur (22) sont disposées sur le côté extérieur de l'élément intérieur (12),
(b) une couche d'isolation (44) est appliquée sur les voies de signal (42),
(c) une couche (46) électriquement conductive est prévue sur les voies de signal (44), et
(d) un élément de connexion (40) reliant la plaque de canal (26) et la plaque d'obturateur (32), est rélié à cette couche (46) électriquement conductive de sorte à être électriquement conductif.

13. Détecteur infrarouge selon la revendication 7, **caractérisé par le fait que** le plan d'image d'un champ de vision engendré par un système optique de reproduction, est disposé à l'intérieur des ouvertures d'obturateur (34) de la plaque d'obturateur (32).
